# EUROPÄISCHE PATENTSCHRIFT

(11) **EP 3 205 518 B1**
(45) Veröffentlichungstag und Bekanntmachung des Hinweises auf die Patenterteilung: **12.02.2020**
(21) Anmeldenummer: 16206197.2
(22) Anmeldetag: 22.12.2016
(51) Int. Cl.: B60D 5/00, B61D 17/22, B62D 47/02

(54) **MITTEL ZUM SICHERN EINER VERBINDUNG ZWEIER STIRNSEITIG IN UMFANGSRICHTUNG ZUSAMMENTREFFENDER BALGELEMENTE EINES BALGES**
MEANS FOR SECURING A CONNECTION BETWEEN TWO BELLOWS ELEMENTS OF A BELLOWS MEETING AT THE FRONT IN THE DIRECTION OF THE PERIPHERY
MOYEN DESTINÉ À FIXER UN RACCORD ENTRE DEUX ÉLÉMENTS DE SOUFFLET SE FAISANT FACE DANS LA DIRECTION CIRCONFÉRENTIELLE D'UN SOUFFLET

(30) Priorität: 11.02.2016 AT 282016 U; 24.03.2016 DE 202016001988 U
(43) Veröffentlichungstag der Anmeldung: 16.08.2017
(73) Patentinhaber: Hübner GmbH & Co. KG, 34123 Kassel (DE)
(72) Erfinder: Rudolph, Hans-Jakob, 34308 Bad Emstal (DE)
(74) Vertreter: Patentanwälte Walther Hinz Bayer PartGmbB

(56) Entgegenhaltungen:
- EP-A1- 1 810 852
- EP-A1- 2 106 984
- DE-B3- 10 337 301
- DE-B4- 10 154 033

## Beschreibung

Die vorliegende Erfindung betrifft ein Mittel zum Sichern einer Verbindung zweier stirnseitig in Umfangsrichtung des Balges zusammentreffender Balgelemente eines Balges gemäß dem Oberbegriff des Anspruches 1.

Aus der DE 101 54 033 B4 ist ein Balg eines Überganges zwischen zwei Fahrzeugen bekannt, der sich aus einem den Übergang zur Seite und nach oben abdeckenden Oberteil und einem unterhalb des Überganges vorgesehenen Unterteils zusammensetzt. Im Rahmen der Montage dieses Balges an den Übergang wird zunächst das Oberteil auf den Übergang aufgesetzt und an diesem und den Fahrzeugen befestigt, bevor das Unterteil von unten an dem Oberteil angebracht wird.

Wie das Oberteil, so setzt sich auch das Unterteil aus einer Anzahl von Balgelementen zusammen bei dem benachbarte Balgelemente in Längsrichtung an ihrer freien Seite mit einem länglichen Bügel zusammengehalten werden.

Zur Anbringung des Unterteils an dem Oberteil des Balges werden an den stirnseitigen Enden der Balgelemente die dort befindlichen Bügel in Überlappung bebracht und mittels einer quer durch beide Bügel durchgesteckten Schraube gesichert, wobei auf die Schraube eine entsprechende Mutter geschraubt wird. Dieser Vorgang ist bereits sehr aufwendig und erfordert viel Geschick, unter anderem, weil der für die jeweiligen Schraubenschlüssel zur Verfügung stehende Raum begrenzt ist.

Wenn nun zwecks Wartung oder Reparatur das Unterteil wieder gelöst werden soll, müssen die vielen Schrauben wieder aufwendig gelöst werden. Häufig wird dies noch erschwert durch den Umstand, dass die Schrauben in der Zwischenzeit zumindest teilweise korrodiert sind.

Aus der EP 2 106 984 A1 ist ein Übergang zwischen zwei gelenkig miteinander verbundenen Fahrzeugteilen mit einem Übergangsbalg bekannt, wobei der Übergangsbalg einen Balgboden aufweist. Der Balgboden ist lösbar mit dem Übergangsbalg verbunden. Sowohl der Balgboden als auch der Übergangsbalg weisen Leisten auf, die einander überlappen, wobei im Überlappungsbereich zwei Bohrungen vorgesehen sind, die der Aufnahme von Bolzen dienen. Die Bolzen sind durch ein spangenförmiges Sicherungselement gehalten, wobei ein erster Bolzen starr mit dem Sicherungselement verbunden ist, und ein zweiter Bolzen vorgesehen ist, der zwischen zwei Sicherungsflächen des Sicherungselements in der Bohrung gehalten ist.

Der Erfindung liegt die Aufgabe zugrunde, Mittel zum Sichern einer Verbindung zweier stirnseitig zusammentreffender Balgelemente eines Balges der eingangs genannten Art zu schaffen, mit denen eine schnelle und unkomplizierte Verbindung und/oder Trennung stirnseitig zusammentreffender Balgelemente erreicht wird.

Als technische Lösung dieser Aufgabe wird erfindungsgemäß ein Mittel der eingangs genannten Art mit den Merkmalen des Anspruches 1 vorgeschlagen. Das heißt, die Erfindung besteht in der Bereitstellung eines Mittels zur Verbindung von getrennten Balgteilen. Hiebei ist das Halteelement als eine im Wesentlichen U-förmige Spange ausgebildet, wobei die beiden parallelen Stege des U als Bolzen ausgeführt sind, die in ihrem über dem Bügel überstehenden Abschnitt die gewünschte Aussparung zur Aufnahme des Sicherungselementes aufweisen. Die beiden Bolzen sind dann über das Zwischenglied miteinander verbunden. Ein derartiges, im Wesentlichen U-förmiges Halteelement hat den Vorteil, dass beide Bolzen in einem einzigen Arbeitsgang eingesetzt werden können, was zu einer weiteren Arbeitserleichterung und Zeitersparnis bei der Montage und Demontage führt.

Ein nach dieser technischen Lehre ausgebildetes Mittel hat den Vorteil, dass durch die im Bolzen befindliche Aussparung ein steckbares Sicherungselement verwendet werden kann, welches in einfacher Weise anbringbar und abnehmbar ist. Dabei erfolgt eine Linearbewegung beim Einführen des Sicherungselementes, welche sehr viel weniger Raum benötigt als eine Rotationsbewegung bei einer Schraube und welches gleichzeitig viel schneller erfolgen kann, als das Aufschrauben einer Mutter.

Die Trennung kann hierbei an zwei beabstandeten Stellen im Bodenbereich vorgenommen werden, um gegebenenfalls einen Balgboden austauschen zu können. Möglich ist allerdings auch eine Trennung im Seitenwandbereich des Balges, um bei großen Bälgen, also Bälgen mit einer Höhe von über 4 m durch eine Zweiteilung in einen oberen und einen unteren Balgteil den Transport, beispielsweise in einem Container, zu ermöglichen.

Vorteilhafte Weiterbildungen dieses Mittels sind den jeweiligen Unteransprüchen zu entnehmen.

In einer weiteren, besonders bevorzugten Ausführungsform ist das Zwischenglied derart gekrümmt ausgebildet, dass das Zwischenglied in eingebautem Zustand teilweise an dem Bügel zur Anlage kommt. In einer vorteilhaften Weiterbildung ist dabei das Zwischenglied federelastisch ausgebildet.

Dies hat den Vorteil, dass die Spange derart an dem Bügel montiert werden kann, dass die Feder gespannt ist. In diesem Falle wird ein unbeabsichtigtes Lösen des Sicherungselementes vermieden, weil aufgrund der Federkraft das Sicherungselement fest angedrückt wird und nicht verloren gehen kann.

In einer ganz besonders bevorzugten Ausführungsform ist die Spange derart ausgebildet, dass diese im montierten Zustand federelastisch gespannt ist. Dies wird insbesondere dadurch erreicht, dass die Aussparung derart im Bolzen angeordnet ist, dass das Zwischenglied im montierten Zustand federelastisch gespannt ist, wobei der Mittelabschnitt des Zwischengliedes am Bügel anliegt.

Dies hat den Vorteil, dass bei der Montage die Spange mit den beiden Bolzen durch die dafür vorgesehenen Öffnungen im Bügel durchgesteckt wird, wobei die beiden Bolzen mit einer Hand weiter als notwendig gegen die Federkraft des Zwischengliedes hindurchgedrückt werden, sodass auf der anderen Seite das Sicherungselement, vorzugsweise ein Standard- oder Federsplint durch die Aussparungen in den beiden Bolzen hindurchgeschoben werden kann. Anschließend wird die Spange wieder losgelassen und die Federkraft des Zwischengliedes drückt die Bolzen wieder so weit zurück, dass das Sicherungselement, vorzugsweise der Standard- oder Federsplint, am Bügel anliegt. Die in dieser Position verbleibende Federkraft des Zwischengliedes hat den Vorteil, dass hierdurch der Splint in dieser Position verklemmt wird und nicht so leicht verloren gehen kann.

Ein derartiges Mittel zum Sichern der Verbindung zweier stirnseitig zusammentreffender Balgelemente eines Balges kann von einer Person in einfacher Weise schnell und unkompliziert montiert werden und auch ebenso schnell durch Drücken der Spange im Bereich der Bolzen und Entfernen des Sicherungselementes wieder demontiert werden.
In einer anderen, bevorzugten Ausführungsform ist das Sicherungselement als Standardsplint oder als Federsplint ausgebildet. Der Federsplint rastet aufgrund seiner Federeigenschaften am Bolzen ein und ist somit gegen Verlust gesichert. Der Standardsplint müsste an seinem durch den hinteren Bolzen hindurchragenden Abschnitt mechanisch umgebogen werden, um ein Verlieren zu vermeiden.

In einer bevorzugten Weiterbildung des Standardsplintes ist der längere Schenkel mit seinem überstehenden Bereich zum ersten Schenkel hin gebogen, sodass sich auf diese Weise ein Stopper ausbildet. Dabei wird der Standardsplint mit seinem ersten, kürzeren Schenkel durch die Aussparung in den beiden Bolzen hindurchgesteckt, sodass der quer zur Längsrichtung des Schenkels angeordnete Stopper hinter dem zweiten Bolzen angeordnet ist. Sollte nun der Splint aufgrund von Vibrationen oder anderen Gegebenheiten wieder aus der Aussparung herausrutschen, so wird dies durch den Stopper vermieden, der an der Außenseite des äußeren Bolzens zur Anlage kommt und ein weiteres Herausrutschen des Standardsplintes verhindert.

Weitere Vorteile des erfindungsgemäßen Mittels ergeben sich aus der beigefügten Zeichnung und den nachstehend beschriebenen Ausführungsformen. Ebenso können die vorstehend genannten und die noch weiter ausgeführten Merkmale erfindungsgemäß jeweils einzeln oder in beliebigen Kombinationen miteinander verwendet werden. Die erwähnten Ausführungsformen sind nicht als abschließende Aufzählung zu verstehen, sondern haben vielmehr beispielhaften Charakter. Es zeigen:
- Fig. 1: eine Seitenansicht eines mit einem Balg versehenen Überganges zwischen zwei gelenkig miteinander verbundenen Fahrzeugen, wobei ein Unterteil des Balges an einem Oberteil des Balges angebracht und mit dem erfindungsgemäßen Mittel gesichert ist;
- Fig. 2: eine explosionsartige Darstellung eines Teiles des Balges gemäß Fig. 1 mit dem erfindungsgemäßen Mittel;
- Fig. 3a: eine Explosionsdarstellung des erfindungsgemäßen Mittels zum Sichern einer Verbindung zweier stirnseitig zusammentreffender Balgelemente des Balges gemäß Fig. 1 im unmontierten Zustand;
- Fig. 3b: die Mittel gemäß Fig. 3b im montierten Zustand;
- Fig. 4: eine geschnitten dargestellte Draufsicht auf die Verbindung zweier stirnseitig zusammentreffender Balgelemente des Balges gemäß Fig. 1 zusammen mit dem daran montierten Mittel zum Sichern der Verbindung, geschnitten entlang Linie IV - IV in Fig. 2;
- Fig. 5: eine geschnitten dargestellte Seitenansicht auf die Verbindung gemäß Fig. 4 zweier stirnseitig zusammentreffender Balgelemente des Balges gemäß Fig. 1 zusammen mit dem daran montierten Mittel zum Sichern der Verbindung, geschnitten entlang Linie V - V in Fig. 4.

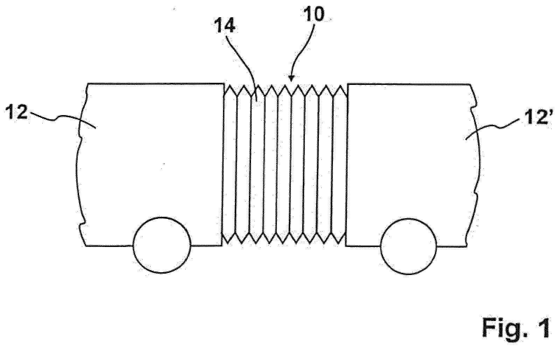

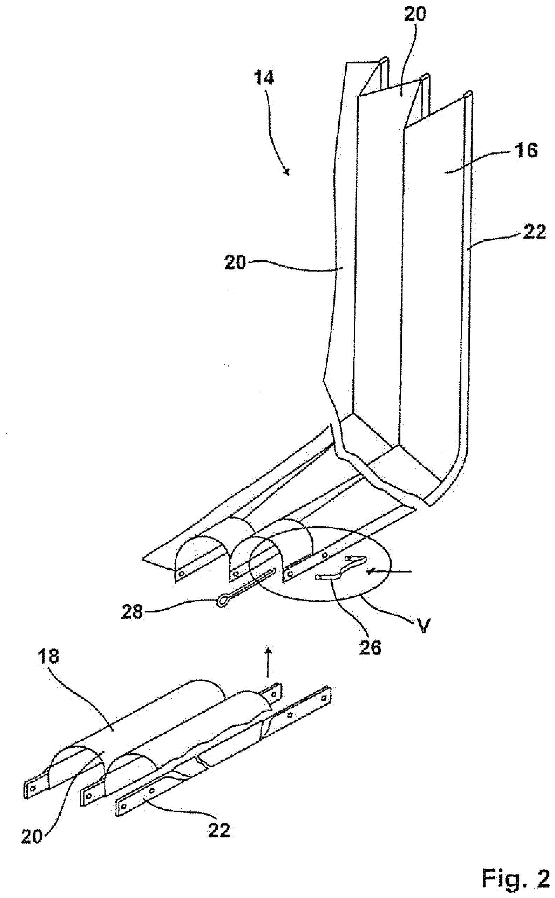

In Fig. 1 ist ein Ausschnitt eines Gelenkbusses dargestellt, der einen Übergang 10 zwischen zwei gelenkig miteinander verbundenen Fahrzeugen 12 und 12' darstellt, wobei der Übergang 10 durch einen Balg 14 geschlossen ist, um die Insassen des Fahrzeuges zu schützen. Wie insbesondere Fig. 2 zu entnehmen ist, setzt sich dieser Balg 14 aus einem Oberteil 16 und einem Unterteil 18 zusammen, wobei sowohl das Oberteil 16, als auch das Unterteil 18 eine Anzahl von Balgelementen 20 aus flexiblem Material aufweisen. Das Unterteil 18 stellt hierbei den Balgboden dar, wobei der Balgboden mit dem Oberteil 16 den Balg bildet. Benachbarte Balgelemente 20 sind in Längsrichtung mittels eines Bügels 22 zusammengehalten. Dieser Bügel 22 ist in der Regel aus einem U-förmigen Profil gebildet, wobei die freien Enden des jeweiligen Balgelementes 20 in das U des Bügels 22 hineingesteckt werden, bevor der Bügel 22 derart verpresst wird, dass die Balgelemente 20 miteinander verbunden sind.

Das Unterteil 18 ist derart mit dem Oberteil 16 verbunden, dass der über das Stirnende der Balgelemente 20 überstehende Abschnitt des Bügels 22 über ein freies Ende des Bügels 22 des Oberteils geschoben wird, sodass die beiden Stirnenden der Balgelemente 20 aneinanderstoßen und eine geschlossene Umhüllung des Übergangs 10 gewährleisten.

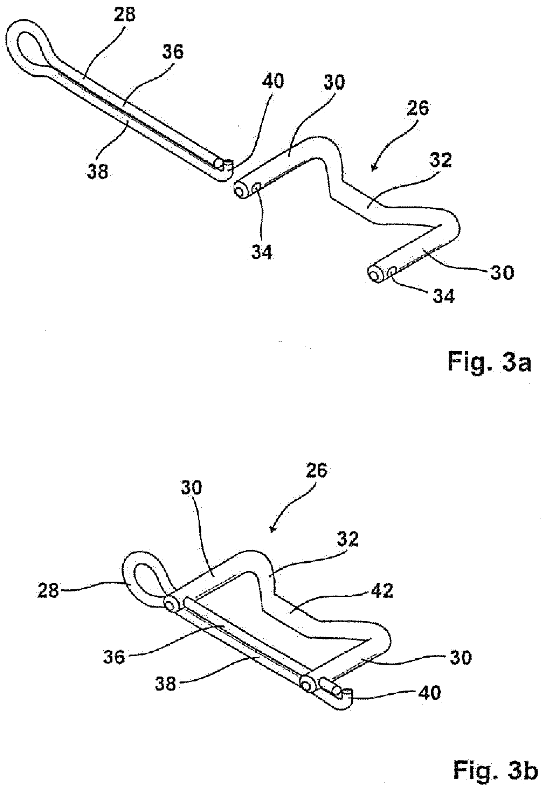

Zur Sicherung dieser Verbindung zweier stirnseitig zusammentreffender Balgelemente 20 des Balges 14 wird ein Halteelement verwendet, wie es in den Figuren 3a und 3b näher dargestellt ist. Das Halteelement setzt sich aus einer Spange 26 und einem Sicherungselement 28 zusammen, wobei das Sicherungselement 28 als ein Standardsplint 28 ausgebildet ist. Diese Spange 26 ist im Wesentlichen U-förmig ausgebildet und besitzt an den beiden kurzen Stegen des U jeweils einen Bolzen 30, während die beiden Bolzen 30 über ein Zwischenglied 32 miteinander verbunden sind. Nahe seinem freien Ende weist der Bolzen 30 eine Aussparung 34 auf, die so dimensioniert ist, dass ein kurzer Schenkel 36 des Spintes 28 hindurchgelangen kann. An einem freien Ende des langen Schenkels 36 des Spintes 28 ist ein Stopper 40 derart ausgebildet, dass der über den kurzen Schenkel 36 hinausragende Abschnitt des langen Schenkels 38 zum kurzen Schenkel 36 hin um ca. 90° gebogen ist.

Das Zwischenglied 32 der Spange 26 ist derart gebogen ausgebildet, dass ein am Zwischenglied 32 gradlinig ausgebildeter Mittelabschnitt 42 zum Bügel hin ausgerichtet ist. Gleichzeitig ist der Mittelabschnitt 42 senkrecht zu dem Bolzen 30 angeordnet.

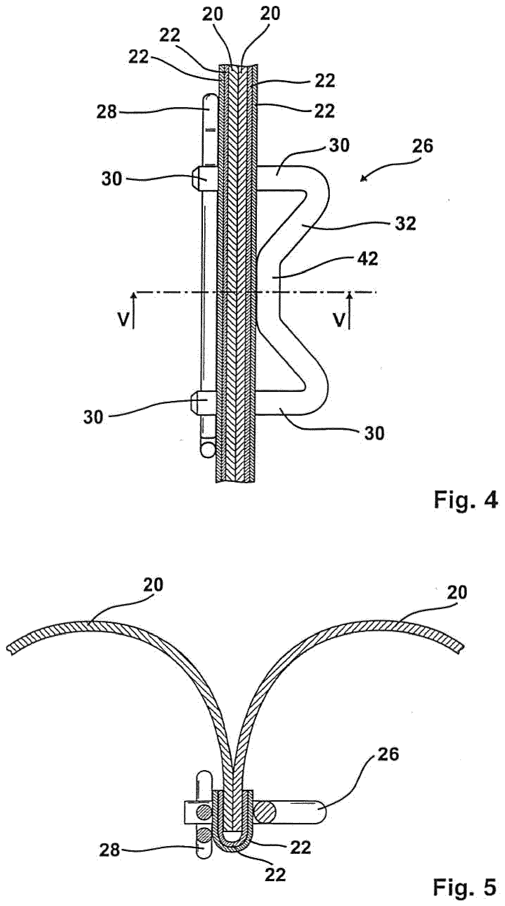

In den Figuren 4 und 5 ist das Haltelement im montierten Zustand dargestellt. Dabei reichen die Bolzen 30 der Spange 26 durch Öffnungen 24 in den Bügeln 22 so weit hindurch, dass die Aussparungen 34 der Bolzen 30 frei liegen, während die Spange 26 mit ihrem Mittelabschnitt 42 an dem Bügel 22 zur Anlage kommt. Durch die Aussparung 34 ist der Splint 28 mit seinem kurzen Schenkel 36 hindurchgesteckt und sichert somit das Halteelement ab.

Das Zwischenglied 32 ist federelastisch ausgebildet. In dem in den Figuren 4 und 5 dargestellten Zustand ist das Zwischenglied 32 gespannt, sodass die Federkraft des Zwischengliedes 32 den Splint 28 gegen den Bügel 22 verspannt, um ein Herausfallen des Splintes 28 trotz der am Fahrzeug herrschenden Vibrationen zu vermeiden. Darüber hinaus ist der Splint 28 durch den Stopper 40 gegen Verlust versichert.

Die Montage/Demontage des aus Spange 26 und Splint 28 bestehenden Halteelementes geschieht wie folgt:
Zunächst wird der Bügel 22 mit seinem über das Stirnende des Balgelementes 20 hinausragenden Abschnitt auf ein Ende des benachbarten Bügels 22 des Oberteils 16 derart gestülpt, dass die vorbereiteten Öffnungen 24 miteinander fluchten. Anschließend wird die Spange 26 mit ihren Bolzen 30 durch die Öffnungen 24 hindurchgedrückt, wobei auf das Zwischenglied 32 eine so große Kraft ausgeübt wird, dass die Bolzen 30 die Aussparung 34 auf der anderen Seite des Bügels 22 deutlich freigeben. Durch diese Aussparungen 34 wird dann der kurze Schenkel 36 des Splintes 28 so weit hindurchgeschoben, dass der Stopper 40 des langen Schenkels 38 den hinteren Bolzen 30 hintergreift. Danach wird die Spange 26 losgelassen und das federelastische Zwischenglied 32 zieht die Bolzen 30 zurück, bis die Spange 28 am Bügel 22 zur Anlage kommt. Dabei behält das Zwischenglied 32 eine gewisse Federkraft, sodass der Splint 28 zuverlässig in den Aussparungen 30 gehalten wird.

Zur Demontage wird analog in umgekehrter Reihenfolge vorgegangen, dass heißt, zunächst einmal wird die Spange 26 im Bereich der Bolzen 30 gegen die Federkraft des Zwischengliedes 32 so weit gedrückt, bis der Splint 28 frei liegt und ohne großen Kraftaufwand aus den Aussparungen 34 herausgezogen werden kann. Dabei wird der lange Schenkel 38 des Splints 28 so weit verbogen, dass der Stopper 40 an dem Bolzen 30 vorbeigeführt werden kann. Anschließend wird die Spange 28 aus den Bügeln 22 herausgezogen, sodass das Unterteil 18 ungesichert am Oberteil 16 hängt. Nun kann das Unterteil 18 in einfacher Weise vom Oberteil 16 gelöst werden.

In einer anderen, hier nicht dargestellten Ausführungsform kann der Splint auch als Federsplint ausgebildet sein. In diesem Fall wird der Federsplint durch seine Federwirkung gegen Herausfallen gesichert.

### Bezugszeichenliste:

- 10: Übergang
- 12, 12': Fahrzeugteile
- 14: Balg
- 16: Oberteil
- 18: Unterteil
- 20: Balgelement
- 22: Bügel
- 24: Öffnung
- 26: Spange
- 28: Splint
- 30: Bolzen
- 32: Zwischenglied
- 34: Aussparung
- 36: kurzer Schenkel
- 38: langer Schenkel
- 40: Stopper
- 42: Mittelabschnitt

## Patentansprüche

1. Mittel zum Sichern einer Verbindung zweier stirnseitig in Umfangsrichtung des Balges zusammentreffender Balgelemente eines Balges, wobei benachbarte Balgelemente (20) mittels eines Bügels (22) in Längsrichtung des Bügels zusammengehalten werden, wobei sich die Bügel (22) der stirnseitig zusammentreffenden Balgelemente (20) teilweise überlappen, wobei das Mittel die sich überlappenden Bügel (22) sichert und wobei das Mittel ein Halteelement (26) und mindestens ein Sicherungselement (28) umfasst,
dass das Halteelement (26) mindestens einen durch die sich überlappenden Bügel (22) hindurchreichenden Bolzen (30) umfasst,
**dadurch gekennzeichnet,**
**dass** der die Bügel (22) überstehende Abschnitt eine Aussparung (34) zur Aufnahme des Sicherungselementes (28) aufweist, wobei das Haltelement als eine im Wesentlichen U-förmige Spange (26) ausgebildet ist, die zwei parallel ausgerichtete Bolzen (30) und ein die Bolzen (30) miteinander verbindendes Zwischenglied (32) umfasst.

2. Mittel zum Sichern einer Verbindung zweier stirnseitig zusammentreffender Balgelemente eines Balges nach Anspruch 1,
**dadurch gekennzeichnet,**
**dass** das Zwischenglied (32) derart gebogen ausgebildet ist, dass das Zwischenglied (32) im eingebauten Zustand teilweise an einem der Bügel (22) zur Anlage kommt.

3. Mittel zum Sichern einer Verbindung zweier stirnseitig zusammentreffender Balgelemente eines Balges nach einem der voranstehenden Ansprüche,
**dadurch gekennzeichnet,**
**dass** das Zwischenglied (32) federelastische Eigenschaften besitzt.

4. Mittel zum Sichern einer Verbindung zweier stirnseitig zusammentreffender Balgelemente eines Balges nach einem der voranstehenden Ansprüche,
**dadurch gekennzeichnet,**
**dass** das Zwischenglied (32) einen geradlinig ausgebildeten Mittelabschnitt (42) aufweist, sodass das Zwischenglied (32) mit dem gesamten Mittelabschnitt (42) am Bügel (22) zur Anlage kommt.

5. Mittel zum Sichern einer Verbindung zweier stirnseitig zusammentreffender Balgelemente eines Balges nach einem der voranstehenden Ansprüche,
**dadurch gekennzeichnet,**
**dass** die Spange (26) derart ausgelegt ist, dass die Spange (26) im montierten Zustand federelastisch gespannt ist,

6. Mittel zum Sichern einer Verbindung zweier stirnseitig zusammentreffender Balgelemente eines Balges gemäß Anspruch 5,
**dadurch gekennzeichnet,**
**dass** die Aussparung (34) derart im Bolzen (30) angeordnet ist, dass das Zwischenglied (32) im montierten Zustand federelastisch gespannt ist, wobei der Mittelabschnitt (42) des Zwischengliedes (32) am Bügel (22) anliegt.

7. Mittel zum Sichern einer Verbindung zweier stirnseitig zusammentreffender Balgelemente eines Balges nach einem der voranstehenden Ansprüche,
**dadurch gekennzeichnet,**
**dass** das Sicherungselement als Standardsplint (28) ausgebildet ist und einen ersten, kürzeren Schenkel (36) und einen zweiten längeren Schenkel (38) aufweist.

8. Mittel zum Sichern einer Verbindung zweier stirnseitig zusammentreffender Balgelemente eines Balges nach Anspruch 7,
**dadurch gekennzeichnet,**
**dass** der zweite, längere Schenkel (38) an seinem, dem ersten, kürzeren Schenkel (36) überstehenden Bereich einen zum ersten Schenkel (36) hin gebogenen Stopper (40) aufweist.

9. Mittel zum Sichern einer Verbindung zweier stirnseitig zusammentreffender Balgelemente eines Balges nach einem der voranstehenden Ansprüche,
**dadurch gekennzeichnet,**
**dass** das Sicherungselement als Federsplint ausgebildet ist.

10. Mittel zum Sichern einer Verbindung zweier stirnseitig zusammentreffender Balgelemente eines Balges nach einem der voranstehenden Ansprüche,
**dadurch gekennzeichnet,**
**dass** die Verbindung im Seitenwand- und/oder Bodenbereich des Balges vorgenommen ist.

## Claims

1. Means for securing a connection between two bellows elements of a bellows meeting at front ends in a circumferential direction of the bellows, wherein adjacent bellows elements (20) are held together by means of a bracket (22) in the longitudinal direction of the bracket, wherein the brackets (22) of the bellows elements (20) meeting at front ends partially overlap, wherein the means secures the overlapping brackets (22), and wherein the means comprise a retaining element (26) and at least one securing element (28), the retaining element (26) comprising at least one bolt (30) extending through the overlapping brackets (22),
**characterised in that**
the section projecting beyond the brackets (22) has a recess (34) for receiving the securing element (28), wherein the retaining element is formed as a substantially U-shaped clasp (26), comprising two bolts (30) aligned in parallel and an intermediate member (32) interconnecting the bolts (30).

2. Means for securing a connection between two bellows elements of a bellows meeting at front ends according to claim 1,
**characterized in that**
the intermediate member (32) is designed to be bent in such a way that, in the installed state, the intermediate member (32) comes to a partial rest against one of the brackets (22).

3. Means for securing a connection between two bellows elements of a bellows meeting at front ends according to one of the preceding claims,
**characterized in that**
the intermediate member (32) has spring-elastic properties.

4. Means for securing a connection between two bellows elements of a bellows meeting at front ends according to one of the preceding claims,
**characterized in that**
the intermediate member (32) has a rectilinearly formed middle section (42), so that the intermediate member (32) comes to rest against the bracket (22) with the entire middle section (42).

5. Means for securing a connection between two bellows elements of a bellows meeting at front ends according to one of the preceding claims,
**characterized in that**
the clasp (26) is designed such that the clasp (26) is tensioned in a spring-elastic manner in the mounted state.

6. Means for securing a connection between two bellows elements of a bellows meeting at front ends according to claim 5,
**characterized in that**
the recess (34) is arranged in the bolt (30) in such a way that the intermediate member (32) is tensioned in a spring-elastic manner in the mounted state, wherein the middle section (42) of the intermediate member (32) rests against the bracket (22).

7. Means for securing a connection between two bellows elements of a bellows meeting at front ends according to one of the preceding claims,
**characterized in that**
the securing element is designed as a standard split pin (28) and has a first, shorter leg (36) and a second, longer, leg (38).

8. Means for securing a connection between two bellows elements of a bellows meeting at front ends according to claim 7,
**characterized in that**
the second, longer leg (38) has a stopper (40) bent towards the first leg (36) at its region projecting beyond the first, shorter leg (36).

9. Means for securing a connection between two bellows elements of a bellows meeting at front ends according to one of the preceding claims,
**characterized in that**
the securing element is designed as a spring split pin.

10. Means for securing a connection between two bellows elements of a bellows meeting at front ends according to one of the preceding claims,
**characterized in that**
the connection is carried out in the area of the lateral wall and/or floor of the bellows.

## Revendications

1. Moyen de fixation d'une liaison entre deux éléments de soufflet d'un soufflet se rejoignant en face avant dans la direction circonférentielle du soufflet, où des éléments de soufflet adjacents (20) sont maintenus ensemble au moyen d'un étrier (22) dans la direction longitudinale de l'étrier, où les étriers (22) des éléments de soufflet (20) se rejoignant en face avant se chevauchent partiellement, où le moyen fixe les étriers (22) se chevauchant et où le moyen comprend un élément de maintien (26) et au moins un élément de fixation (28), l'élément de maintien (26) comprenant au moins un boulon (30) traversant les étriers (22) se chevauchant,
**caractérisé en ce que**
la section dépassant les étriers (22) présente un évidement (34) pour recevoir l'élément de fixation (28), où l'élément de maintien se présente sous la forme d'une agrafe (26) sensiblement en forme de U qui comprend deux boulons (30) alignés parallèlement et un élément intermédiaire (32) reliant les boulons (30).

2. Moyen de fixation d'une liaison entre deux éléments de soufflet d'un soufflet se rejoignant en face avant selon la revendication 1,
**caractérisé en ce que**
l'élément intermédiaire (32) est formé de manière courbée de telle sorte que l'élément intermédiaire (32) entre en appui partiel avec l'un des étriers (22) à l'état installé.

3. Moyen de fixation d'une liaison entre deux éléments de soufflet d'un soufflet se rejoignant en face avant selon l'une des revendications précédentes,
**caractérisé en ce que**
l'élément intermédiaire (32) présente des propriétés élastiques d'un ressort.

4. Moyen de fixation d'une liaison entre deux éléments de soufflet d'un soufflet se rejoignant en face avant selon l'une des revendications précédentes,
**caractérisé en ce que**
l'élément intermédiaire (32) présente une section médiane (42) de forme rectiligne, de sorte que l'élément intermédiaire (32) entre en appui sur le support (22) avec toute la section médiane (42).

5. Moyen de fixation d'une liaison entre deux éléments de soufflet d'un soufflet se rejoignant en face avant selon l'une des revendications précédentes,
**caractérisé en ce que**
l'agrafe (26) est conçue de telle sorte que l'agrafe (26) est tendue avec l'élasticité d'un ressort à l'état monté.

6. Moyen de fixation d'une liaison entre deux éléments de soufflet d'un soufflet se rejoignant en face avant selon la revendication 5,
**caractérisé en ce que**
l'évidement (34) est disposé dans le boulon (30) de telle manière que l'élément intermédiaire (32) est tendu avec l'élasticité d'un ressort à l'état monté, la section médiane (42) de l'élément intermédiaire (32) étant en appui contre l'étrier (22).

7. Moyen de fixation d'une liaison entre deux éléments de soufflet d'un soufflet se rejoignant en face avant selon l'une des revendications précédentes,
**caractérisé en ce que**
l'élément de fixation est réalisé sous la forme d'une goupille fendue (28) et présente une première branche plus courte (36) et une deuxième branche plus longue (38).

8. Moyen de fixation d'une liaison entre deux éléments de soufflet d'un soufflet se rejoignant en face avant selon la revendication 7,
**caractérisé en ce que**
la deuxième branche plus longue (38) comporte un arrêt (40) courbé vers la première branche (36) dans sa région dépassant de la première branche plus courte (36).

9. Moyen de fixation d'une liaison entre deux éléments de soufflet d'un soufflet se rejoignant en face avant selon l'une des revendications précédentes,
**caractérisé en ce que**
l'élément de fixation prend la forme d'une goupille fendue à ressort.

10. Moyen de fixation d'une liaison entre deux éléments de soufflet d'un soufflet se rejoignant en face avant selon l'une des revendications précédentes,
**caractérisé en ce que**
la connexion est réalisée dans la région de la paroi latérale et/ou du sol du soufflet.
